# EUROPÄISCHE PATENTANMELDUNG

(11) **EP 1 130 281 A2**
(43) Veröffentlichungstag der Anmeldung: **05.09.2001**
(21) Anmeldenummer: 00126266.6
(22) Anmeldetag: 01.12.2000
(51) Int. Cl.: F16F 15/26, F02B 75/06

(54) **Ausgleichswelle für Verbrennungsmotoren**

(30) Priorität: 15.12.1999 DE 19928416
(71) Anmelder: AUDI AG, 85045 Ingolstadt (DE)
(72) Erfinder: Klumpp, Holger, 85114 Buxheim (DE)

(57) **Zusammenfassung**

Die Erfindung bezieht sich auf Ausgleichswellen für Verbrennungsmotoren, die zum Ausgleich freier Massenkräfte und/oder -momente umlaufende Ausgleichsmassen aufweisen, die in einem festen Übersetzungsverhältnis zur Kurbelwelle angetrieben sind und gleichzeitig den Antrieb von Nebenaggregaten bilden, wobei zur baulichen Vereinfachung auf der Ausgleichswelle mindestens ein Nocken (7) zum Antrieb eines Nebenaggregates (10) drehfest angeordnet ist und der Nocken (7) zugleich einen Teil der Ausgleichsmasse bildet.

## Beschreibung

Die Erfindung betrifft Ausgleichswellen für Verbrennungsmotoren, die gleichzeitig den Antrieb von Nebenaggregaten bilden gemäß dem Oberbegriff des Hauptanspruches.

Bei Verbrennungsmotoren werden zum Ausgleich freier Massenkräfte und / oder - momente Ausgleichswellen angewandt, die umlaufende Ausgleichsmassen aufweisen und in einem festen Übersetzungsverhältnis zur Kurbelwelle angetrieben werden.
Allgemein vorbekannt sind, z. B. durch die Schriften US 4 703 724 und US 5 535 643 gattungsgemäße Ausgleichswellen für Verbrennungsmotoren, von denen eine gleichzeitig einen Antrieb eines Nebenaggregates bildet. Die von der Kurbelwelle über Zahnräder angetriebene erste Ausgleichswelle treibt eine Schmierölpumpe an, deren zweites Rad eine zweite Ausgleichswelle treibt und dabei als Umkehrtrieb dient. Die Zahnradpumpe als Nebenaggregat weist nur zentrisch umlaufende Teile auf und wird bei ieder Umdrehung mit quasi kontinuierlichem Drehmoment angetrieben.
Vorbekannte Anordnungen zum Massenausgleich sind mit zwei in unterschiedlicher Distanz beidseitig der Kurbelwelle, in axialer Richtung parallel zu dieser, angeordneten Ausgleichswellen ausgestattet. Der Antrieb einer der Ausgleichswellen - DE 32 11 655 A1 - oder auch beider - DE 25 08 325 A1 - wird zum Antrieb von Nebenaggregaten genutzt.
Bei der Lösung gemäß der Schrift DE 32 11 655 A1 wird die näher an der Kurbelwelle liegende erste Ausgleichswelle von der Kurbelwelle direkt über ein Zahnradpaar angetrieben. Der Antrieb der zweiten Ausgleichswelle erfolgt über einen Kettentrieb, welcher über ein gesondertes Zahnrad läuft, welches die Schmierölpumpe mit niedrigerer Drehzahl als die Kurbelwelle antreibt.

Vorbekannt ist weiterhin aus der Schrift DE-GM 17 73 275 ein von der Kurbelwelle ausgehender Zahnradtrieb für zwei unterhalb der Kurbelwelle angeordnete Ausgleichswellen, wobei der Zahnradtrieb unter Anwendung eines großen Zwischenrades als Nebenaggregat eine Zahnradölpumpe treibt

Bei allen vorbeschriebenen Antrieben für die Nebenaggregate wird die Masse des Antriebes nicht als exzentrisch umlaufende Masse wirksam.

Weiterhin vorbekannt ist aus der Schrift DE 36 07 133 A1 eine Kurbelwelle mit einer Nockenanordnung, die linear geführte Ausgleichsmassen gegen Federkraft bewegt und dabei gleichzeitig Nebenaggregate antreibt. Als geeignete Nebenaggregate sind Kolbernfördereinheiten für Kraftstoff bzw. Schmieröl gezeigt - Fig.3 -. Die von der Ausgleichsmasse angetriebenen Teile der Nebenaggregate können bei dieser Lösung zum Massenausgleich beitragen.

Aufgabe der Erfindung ist es, die umlaufenden Massen einer Ausgleichswelle beim Antrieb eines Nebenaggregates mit vorzugsweise stark pulsierendem Antriebsmoment vorzugsweise einer Einspritzpumpe bzw. einem Druckerzeuger für Einspritzanlagen für Verbrennungskraftmaschinen zu nutzen.
Dabei sollen die bewegten Massen des Antriebes und ggf. des Nebenaggregates für den Ausgleich der freien Massenkräfte und / oder -momente genutzt werden.

Diese Aufgabe wird bei gattungsgemäßen Ausgleichswellen erfindungsgemäß durch die kennzeichnenden Merkmale des Patentanspruchs 1 gelöst.

Erfindungsgemäß vorteilhaft ist der Antriebsnocken des Nebenaggregates auf der vorhandenen Ausgleichswelle angeordnet. Es ist somit zum Antrieb des Nebenaggregates kein zusätzlicher Bauraum notwendig, somit wird eine kompakte Anordnung von Motor, Ausgleichswelle und Nebenaggregat geschaffen und der gesamt erforderliche Bauteilaufwand verringert.

In einer vorteilhaften Gestaltung der Erfindung bildet der Nocken einen Teil der auf der Welle angeordneten Ausgleichsmasse. Die Masse der Ausgleichsgewichte kann somit verringert werden und es wird die Energie der umlaufenden Massen mit zum Antrieb des Nebenaggregates benutzt.

Bei einer möglichen Ausgestaltung der Erfindung wird durch den Nocken eine Pumpe, vorzugsweise eine Kolbenpumpe, für eine Einspritzanlage angetrieben. Die erfindungsgemäße Gestaltung des Antriebs mittels des auf der Ausgleichswelle angeordneten Nockens ist vorteilhaft, da durch die wechselnden Belastungszustände Drehmomentenspitzen auftreten, welche durch die Trägheit der umlaufenden Massen gedämpft werden.

Eine erfindungsgemäße Ausgleichswelle 1 kann bei Zwei- und Viertaktmotoren von der Kurbelwelle angetrieben, synchron mit Kurbelwellendrehzahl oder doppelter Kurbelwellendrehzahl umlaufen.
Bei beiden Motorenarten kann eine Ausgleienswelle 1, die mit Kurbelwellendrehzahl jedoch entgegengesetzt der Kurbelwellen-Drehrichtung umläuft, zum Massen- und Momenten-Ausgleich 1. Ordnung des Kurbeltriebes genutzt werden. Mit doppelter Kurbelwellendrehzahl umlaufende Ausgleichswellen 1 können Massenkräfte und Momente 2. Ordnung ausgleichen und gleichfalls Nocken zum Antrieb von einem oder mehreren Förderelementen einer Pumpe für Einspritzanlagen aufweisen.
Bei allen Anwendungen vermindern die umlaufenden Massen der Ausgleichsanordnung hohe Drehmoment-Schwankungen, die im Antrieb zwischen Kurbelwelle und der Antriebswelle in nachteiliger Weise typisch bei Hochdruck-Einspritzanlagen mit Förderelementen auftreten.
Die erfindungsgemäße Kombination einer Welle, die sowohl Ausgleichs- als auch Nockenwelle ist, weist den vorerwähnten dynamischen Vorteil für ihre Antrieb auf und erlaubt die Einsparung von speziellen Schwungmassen auf der Antriebswelle der Einspritzförderelemente bzw. Pumpe einer Einspritzanlage sowie deren Gewicht.

Weitere Einzelheiten der Erfindung werden in der Zeichnung anhand eines schematisch dargestellten Ausführungsbeispiels beschrieben.

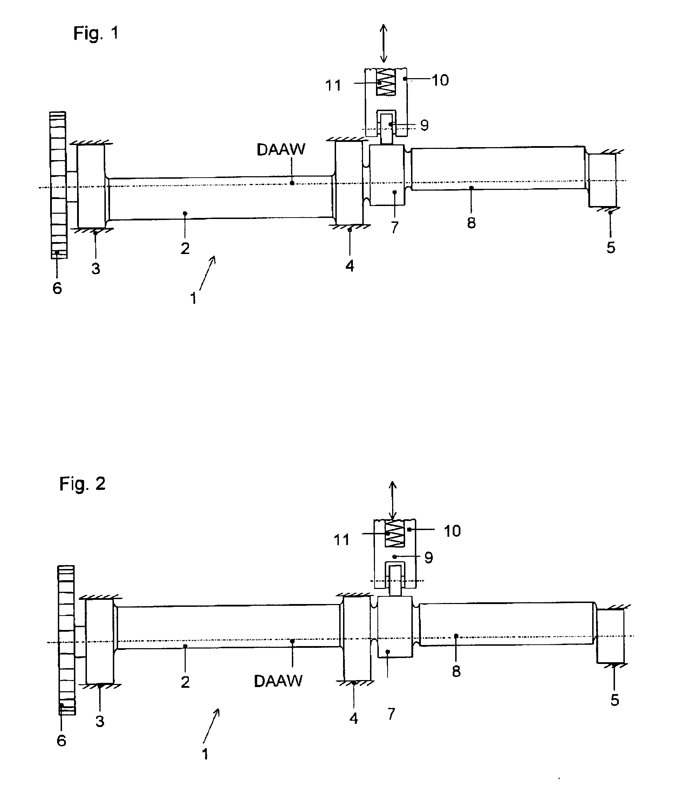

Es zeigt Fig. 1 eine erfindungsgemäß ausgestaltete Ausgleichswelle 1 für Verbrennungsmotoren mit außermittig zu ihrer Drehachse (DAAW) angeordneten Ausgleichsgewichten 2; 8. Die Ausgleichswelle 1 ist drehbar in 3 ortsfesten Lagern 3; 4; 5 geführt und wird von einem formschlüssigen Antriebsmittel - nicht dargestellt -, das in ein drehfest an der Ausgleichswelle 1 angeordnetes Antriebselement 6 beispielsweise ein Kettenritzel eingreift angetrieben.
Auf der Ausgleichswelle 1 ist mindestens ein Nocken 7 drehfest angeordnet, mit dem z. B. eine Rolle 9 einer oder mehrerer Betätigungseinrichtungen 10 von Nebenaggregaten, vorzugsweise von einem oder mehreren Förderelementen einer Hochdruckpumpe für Common-rail-Einspritzanlagen oder bei Zweitaktmotoren von Pumpedüse-Elementen, direkt oder indirekt im Eingriff stehen, -nicht dargestellt-. Die drehbar an der Betätigungseinrichtung 10 gelagerte Rolle 9 steht mittels der Kraft einer Feder 11, die auf ihrer der Ausgleichswelle 1 abgewandten Seite fest - nicht dargestellt- abgestützt ist, mit dem Nocken 7 stetig im Eingriff.

In Fig. 2 ist eine erfindungsgemäß ausgestaltete Ausgleichswelle 13 für Verbrennungsmotoren dargestellt. Diese ist Teil einer Anordnung zum Ausgleich von Massenkräften und / oder Momenten 2. Ordnung vorzugsweise für einen 4-Zylinder-4-Takt Motor. Zu ihr ist axial parallel eine weiter Ausgleichswelle -nicht dargestelltangeordnet. Beide Ausgleichswellen laufen gegensätzlich synchron mit doppelter Kurbelwellendrehzahl um und können auf gleicher Höhe zum Erzeugen einer periodisch umlaufenden Massenkraft oder in ihrer Höhe versetzt zum Erzeugen eines zusätzlichen Wechselmomentes angeordnet sein. Analog zu der in Fig. 1 dargestellten Anordnung ist die Ausgleichswelle in drei ortsfesten Lagern 3; 4 und 5 drehbar gelagert und wird vom Antriebselement 6 in einem festen Verhältnis von 2:1 für 4-Takt-Motoren mit der Kurbelwelle angetrieben. Ein Nocken 7 zum Antrieb eines Nebenaggregates ist drehfest auf der Ausgleichswelle 13 angeordnet und bildet einen Teil des Gesamtmassenausgleiches. Die Betätigung mindestens eines Nebenaggregates erfolgt analog wie zu Fig. 1 beschrieben.

## Patentansprüche

1. Ausgleichswellen für Verbrennungsmotoren, die zum Ausgleich freier Massenkräfte und / oder -momente umlaufenden Ausgleichsmassen (2,8) aufweisen, in einem festen Übersetzungsverhältnis zur Kurbelwelle angetrieben sind und gleichzeitig den Antrieb von Nebenaggregaten bilden,
dadurch gekennzeichnet,
daß auf der Ausgleichswelle (1) mindestens ein Nocken (7) zum Antrieb eines Nebenaggregates drehfest angeordnet ist.

2. Ausgleichswelle (1) nach Anspruch 1,
dadurch gekennzeichnet,
daß der Nocken (7) einen Teil der auf ihr angeordneten Ausgleichsmasse bildet.

3. Ausgleichswelle (1) nach Anspruch 1,
dadurch gekennzeichnet,
daß die auf ihr angeordneten Ausgleichsmassen (2, 8) so gestaltet sind, daß Ausgleichsmassen (2), Nocken (7) und die jeweils zugeordnete Betätigungseinrichtung (10) des Nebenaggregates die Gesamtausgleichsmasse bilden.

4. Ausgleichswelle (1) nach Anspruch 1,
dadurch gekennzeichnet,
daß die umlaufenden Nocken (7) jeweils mit einem oder mehreren Einspritzelementen direkt oder indirekt im Eingriff stehen.

5. Ausgleichswelle nach Anspruch 1 und /oder 4,
dadurch gekennzeichnet,
daß die Ausgleichwelle und das von ihr mittels eines Nockens angetriebene Nebenaggregat bei Verbrennungsmotoren mit V-förmig stehenden Zylinderreihen im Freiraum zwischen den Zylindern angeordnet ist.
